# EUROPÄISCHE PATENTSCHRIFT

(11) **EP 0 567 889 B1**
(45) Veröffentlichungstag und Bekanntmachung des Hinweises auf die Patenterteilung: **02.01.2003**
(21) Anmeldenummer: 93106335.8
(22) Anmeldetag: 20.04.1993
(51) Int. Cl.: H04B 7/26, H04L 5/14, H04B 7/06

(54) **System zur bidirektionalen Datenübertragung zwischen mehreren feststehenden Einrichtungen und einem Fahrzeug**
System for bidirectional data transmission between several fixed stations and one mobile station
Système de transmission bidirectionnelle de données entre plusieurs stations fixés et une station mobile

(30) Priorität: 28.04.1992 DE 4213880
(43) Veröffentlichungstag der Anmeldung: 03.11.1993
(73) Patentinhaber: ROBERT BOSCH GMBH, 70442 Stuttgart (DE)
(72) Erfinder: Bode, Friedrich-Wilhelm, Dipl.-Ing., 31552 Apelern (DE); Grabow, Wilhelm, Dr. Dipl.-Ing., 31171 Nordstemmen (DE)

(56) Entgegenhaltungen:
- EP-A- 0 309 855
- EP-A- 0 444 416
- EP-A- 0 464 014
- DE-A- 4 021 636
- US-A- 4 962 534
- 41ST IEEE VEHICULAR TECHNOLOGY CONFERENCE, Mai 1991, ST LOUIS,US; Seiten 793 - 797, XP252675 W.KREMER AND AL 'A Communication Architecture for Real-Time Applications in Short Range Mobile Radio Networks.'
- Advanced Telematics in road transport: Proceedings of the DRIVE Conference in Brussels, February 4-6, 1991 (published by ELSEVIER, Amsterdam, 1991): Project number: V 1030, "A short-ange road to vehicle microwave communicatons link for automatic debiting and other RTI services", pages 248 - 268

## Beschreibung

### Stand der Technik

Die Erfindung geht aus von einem System zur bidirektionalen, elektromagnetischen Übertragung von Datensignalen zwischen mehreren feststehenden Einrichtungen und einer korrespondierenden Fahrzeugeinrichtung nach der Gattung des Hauptanspruchs. In der Veröffentlichung Proceedings of the Drive Conference: 'Advanced Telematics in Road Transport', Februar 4.-6., 1991, Volume 1, wird im Rahmen des PAMELA-Projekts vorgeschlagen, einen Datenaustausch im Mikrowellenbereich mit einem aktiven und semi-passiven Tansponder durchzuführen. Dabei werden Daten von einem Bakengerät zum Sende- und Empfangsteil des Fahrzeuggerätes im sogenannten Downlink mittels amplitudenmodulierten Signalen übertragen. Die Datenübertragung vom Fahrzeug zur Bake erfolgt im Uplink-Betrieb nach dem Transponder-Prinzip. Dabei sende die Bake ein unmoduliertes Trägersignal, das von dem Fahrzeuggerät empfangen wird. Dieses empfangene Signal wird mit den auszusendenden Daten frequenzmoduliert und wieder vom Bakengerät empfangen. Da die Baken-Geräte nur eine geringe Reichweite haben, in der eine zuverlässige Datenübertragung möglich ist, ist es erforderlich, insbesondere bei mehrspurigen Straßen oder Kreuzungen mehrere Baken mit entsprechenden Sendeeinrichtungen aufzustellen. Diese Baken leuchten dabei zumindest teilweise das gleiche Gebiet aus. Würden nun die Baken, d.h. die feststehenden Einrichtungen mit gleicher Frequenz senden, dann würde ein Interferenzfeld mit stark ortsabhängigen Feldststärken erzeugt werden. Aber auch Boden- und Fahrzeugreflexionen führen zu starken ortsabhängigen Änderungen der Empfangsleistung, so daß insgesamt die Datenübertragung zwischen dem Fahrzeug und der feststehenden Einrichtung und in umgekehrter Richtung nicht sicher genug erscheint.

### Vorteile der Erfindung

Das erfindungsgemäße System mit den kennzeichnenden Merkmalen des Hauptanspruchs hat demgegenüber den Vorteil, daß wegen der Überlagerung der synchron gesendeten Datensignale die Feldstärke verstärkt wird, so daß ein größeres Nutzsignal ausgewertet werde kann. Ein weiterer Vorteil ist darin zu sehen, daß wegen der unterschiedlichen Sendefrequenzen der feststehenden Einrichtungen eine gegenseitige Verringerung oder Auslöschung der sich ausbreitenden Wellem am Empfangsort weniger stark ausgebildet ist.

Durch die in den abhängigen Ansprüchen aufgeführten Maßnahmen sind vorteilhafte Weiterbildungen und Verbesserungen des im Hauptanspruch angegebenen Systems möglich. Besondes vorteilhaft ist, daß die als Antenne ausgebildete Empfangseinheit in Streifenleitungstechnik ausgebildet ist. In dieser Technik ist eine ausreichende Bandbreite mit einfachen Mitteln möglich.

Die Verwendung einer Detektordiode zur Demodulation des Antennensignals ist eine besonders einfache und preiswerte Lösung. Dem auf diese Weise gewonnenen Signal wird vorteilhaft ein Filter nachgeschaltet, das entweder Tiefpaß- oder Bandpaßcharakteristik aufweist. Das Filter wird so gewählt, daß die obere Grenzfrequenz auf die maximal zu übertragende Datenrate abgestimmt ist und unterhalb der kleinsten Differenz zwischen den Trägerfrequenzen der feststehenden Einrichtungen liegt. Da jedes der von den einzelnen feststehenden Einrichtungen zugeführten Signale zur Erhöhung des Signal-/Kauschabstandes beiträgt, wird dadurch die Übertragungssicherheit der Datensignale verbessert.

Im Uplink-Betrieb werden vorteilhaft die von den feststehenden Einrichtungen gesendeten Trägersignale jeweils mit den zu sendenden Datensignalen synchron moduliert und anschließend zu den feststehenden Einrichtungen zurückgesendet. Jede feststehende Einrichtung empfängt nur das auf ihre eigene Trägerfrequenz aufmodulierte Signal. Dies ist für eine sichere Datenübertragung günstig, da es unwahrscheinlich ist, daß alle Uplink-Verbindungen gleichzeitig gestört sind. Da die von den feststehenden Einrichtungen empfangenen Datensignale synchron auftreten, können sie auch miteinander inhaltlich verglichen werden, so daß Fehler bei der Übertragung leicht erkennbar sind. Da die Datensignale vorteilhaft noch einem vorgegebenen Protokoll übertragen werden, ist durch Vergleich leicht feststellbar, welche der empfangenen Datensignale fehlerhaft waren, so daß diese leicht aussortiert werden können. Dieses erhöht die Übertragungssicherheit, so daß das System günstig eingesetzt werden kann für die Übertragung von Verkehrs- und Navigationsdaten oder für die Abrechnung von Straßenbenutzungsgebühren.

Weitere Vorteile der Erfindung sind der Beschreibung entnehmbar.

### Zeichnung

Ein Ausführungsbeispiel der Erfindung ist in der Zeichnung dargestellt und in der nachfolgenden Beschreibung näher erläutert. Es zeigen Figur 1 den Sendebetrieb einer Bake (Downlink-Betrieb), Figur 2 den Sendebetrieb eines Fahrzeuges (Uplink-Betrieb), Figur 3 zeigt ein Blockschaltbild einer feststehenden Einrichtung, Figur 4 zeigt eine Anordnung von zwei feststehenden Einrichtungen an einer Straße, Figur 5 zeigt ein Blockschaltbild einer Fahrzeugeinrichtung, die Figuren 6 bis 8 zeigen Diagramme der normierten Empfangsleistung.

### Beschreibung des Ausführungsbeispiels

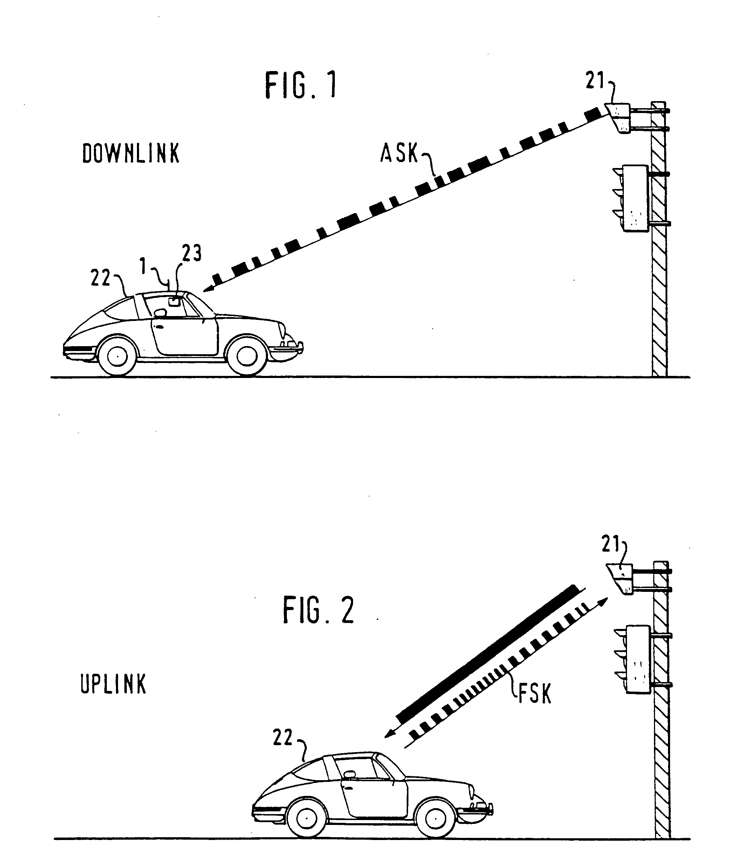

Figur 1 zeigt ein Fahrzeug 22, das eine Fahrzeugeinrichtung 23 aufweist, die mit einer Antenne 1 am Fahrzeug verbunden ist. Das Fahrzeug empfängt von einer feststehenden Einrichtung 21, beispielsweise einer Sende-Sende-/Empfangseinrichtung an einer Bake amplitudenmodulierte Signale ASK. Der Sendebetrieb von der Bake zum Fahrzeug wird als Downlink-Betrieb bezeichnet.

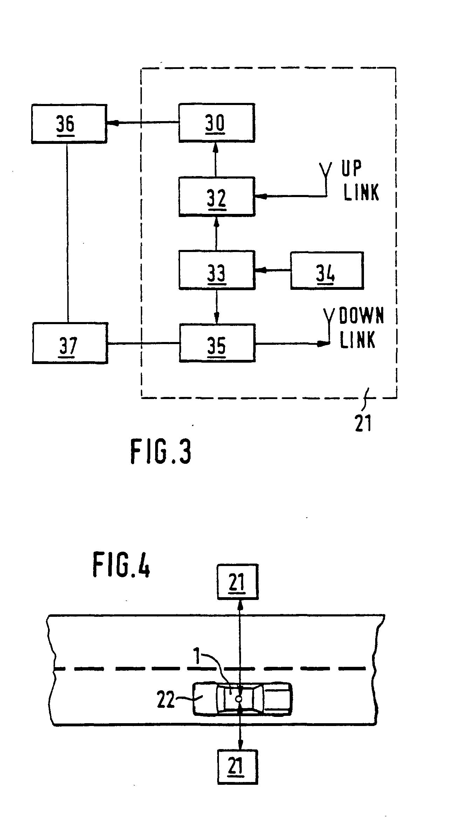

Figur 2 zeigt das Fahrzeug 22 im Uplink-Betrieb, d.h. die Fahrzeugeinrichtung 23 sendet nun nach dem semi-passiven Transponder-Prinzip Datensignale zur Bake 21. Dazu sendet die Bake ein unmoduliertes Trägersignal (CW-Signal). Dieses Signal wird von der Antenne 1 der Fahrzeugeinrichtung 23 empfangen und mit einem vom auszusendenden Datensignal abhängigen frequenzmodulierten Signal (FSK-Signal) moduliert. Dieses geschieht beispielsweise durch Umschalten bzw. Modulation der Reflektanz am Ausgang der Antenne 1. Die Umschaltung der Reflektanz kann im einfachsten Fall durch die zum Empfang der Demodulation verwendeten Diode bewirkt werden. Das auf diese Weise modulierte Signal wird von der Fahrzeugantenne 1 abgestrahlt und von der feststehenden Einrichtung 21 empfangen. Das verwendete semi-passive Transponderverfahren ist per se aus der Veröffentlichung Proceedings of the Drive Conference bekannt. Entsprechend der Figur 4 sind am Straßenrand zwei feststehende Einrichtungen 21 angeordnet, die nach dem zuvor beschriebenen Verfahren senden und empfangen. Durch die Anordnung der beiden Einrichtungen 21 neben der Fahrbahn sind die Abstände zu dem Fahrzeug 22 je nach Straßenbreite und befahrener Fahrspur unterschiedlich. Beispielsweise beträgt bei einer zweispurigen Straße der Abstand zu einem Fahrzeug 2m bzw. 6m.

Figur 3 zeigt ein Blockschaltbild einer feststehenden Einrichtung, die mit einer bestimmten Oszillatorfrequenz, beispielsweise 5,8 GHz betrieben wird. Für diesen Frequenzbereich stehen zwei oder mehr Kanäle mit einer Bandbreite von jeweils 5MHz zur Verfügung. Für den einfachsten Fall werden zwei Einrichtungen 21 verwendet, wie in Figur 4 dargestellt ist. Erfindungsgemäß ist vorgesehen, mehrere Einrichtungen 21 zu verwenden, die dann jeweils in einem vorgegebenen festen Frequenzabstand arbeiten.

Figur 3 zeigt ein Blockschaltbild einer feststehenden Einrichtung 21. Die feststehende Einrichtung 21 arbeitet im Zeitmultiplex-Verfahren, d.h. sie sendet für einen bestimmten Zeitabschnitt zunächst im Downlink-Betrieb amplitudenmodulierte Signale und schaltet dann für den nächsten Zeitabschnitt in den Uplink-Betrieb um.

Die Funktionsweise wird anhand des Blockschaltbildes der Figur 3 zunächst für den Downlink-Betrieb beschrieben. Ein Datensender 37, der die an das Fahrzeug zu sendenden Daten enthält, ist mit einem ASK-Modulator 35 zur Erzeugung der amplitudenmodulierten Sendefrequenzen verbunden. Der Ausgang des Modulators 35 ist mit einer Downlink-Antenne verbunden, die beispielsweise auf der Trägerfrequenz von 5,8GHz arbeitet. Der Oszillator 34 liefert über einen Leistungsteiler 33, beispielsweise über einen 3dB-Teiler, dem Modulator 35 die Trägerfrequenzen zu.

Im Uplink-Betrieb ist eine weitere Antenne mit einem Mischer 32 verbunden. Der Mischer 32 ist ebenfalls mit dem Leistungsteiler 33 und dem Oszillator 34 verbunden. Der Mischer 32 ist mit einem FSK-Demodulator 30 verbunden, der die Uplink-Daten einem Datenempfänger 36 zuführt. Der Datenempfänger 36 kann die demodulierten Daten decodieren und abspeichern oder anzeigen. Die einzelnen Baugruppen des Blockschaltbildes sind bekannt und müssen daher nicht näher beschrieben werden. Wie bereits erwähnt, arbeiten die einzelnen feststehenden Einrichtungen mit unterschiedlichen Trägerfrequenzen, die vorzugsweise auf genormte oder freigegebene Frequenzen abgestimmt sind. Die Einrichtungen 21, die das gleiche Gebiet überstrahlen, arbeiten bevorzugt mit einem Frequenzabstand von 5MHz bei drei oder vier Einrichtungen für ein Gebiet beträgt damit die Bandbreite 20MHz, auf die die Antenne des Fahrzeuggerätes 23 abgestimmt ist.

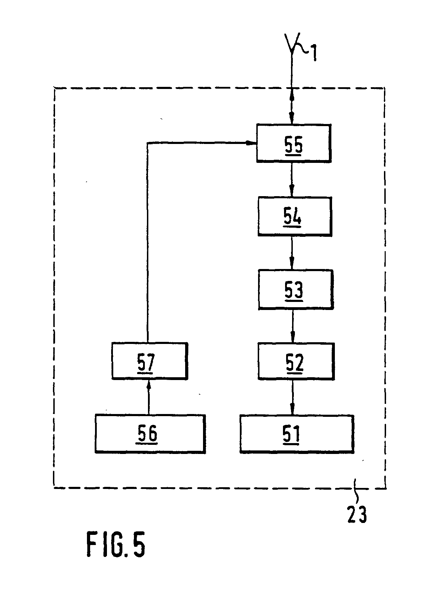

Figur 5 zeigt ein Blockschaltbild der Fahrzeugeinrichtung 23. Eine Antenne 1 ist mit einem Demodulator/Modulator 55 verbunden. Im Uplink-Betrieb überträgt ein Datenspeicher 56, in dem die verschiedensten Fahrzeugdaten enthalten sind, über einen FSK-Generator 57 die frequenzmodulierten Datensignale auf den Modulator 55. Im Uplink-Betrieb sendet zunächst die feststehende Einrichtung 21 ein unmoduliertes Trägersignal (CW-Träger) das von der Antenne 1 empfangen wird. Dieses Trägersignal wird mit dem Signal des FSK-Generators 57 moduliert und als frequenzmoduliertes Signal (FSK) wieder über die Antenne 1 an die feststehende Einrichtung 21 zurückgesendet. Da wenigstens zwei feststehende Einrichtungen 21 gleichzeitig und synchron, aber mit verschiedenen Trägerfrequenzen ein unmoduliertes Signal senden, werden in dem Modulator 55 beide Trägerfrequenzen mit dem FSK-Signal moduliert und an beide feststehende Einrichtungen 21 zurückgesendet.

Im Downlink-Betrieb senden beide feststehende Einrichtungen 21 synchron die gleichen Daten, aber wieder mit verschiedenen Trägerfrequenzen an die Fahrzeugeinrichtung 23. Die Antenne 1 empfängt nun beide modulierten Trägerfrequenzen, die am Empfangsort überlagert sind. In diesem Fall wird davon ausgegangen, daß bei den verwendeten Datenraten und der geringen Reichweite keine Fehler aufgrund von Laufzeitdifferenzen auftreten. Die überlagerten Wellenfelder erzeugen eine Schwebung, die sich aus der Differenz der beiden feststehenden Einrichtungen mit den vorgegebenen Frequenzen bei 5MHz liegt. Bei mehreren feststehenden Einrichtungen 21 tretem in der Schwebung auch vielfache Frequenzen von 5MHz auf.

Die Schwebung kann in dem dem Demodulator 55 nachgeschalteten Filter 54 weggefiltert werden, so daß im Vergleich zu einer einzelnen sendenden feststehenden Einrichtung 21 ein erhöhter Nutzpegel vorliegt. Weiterhin verbessert das Filter 54 das Rauschverhalten des Empfängers. Der Filter 54 hat ein Tiefpaß- oder Bandpaßverhalten. Die obere Grenzfrequenz dieser Filterung hängt von der maximal zu übertragenden Datenrate ab. Es wird derzeit davon ausgegangen, daß die maximale Datenrate zwischen 1Mbit/s und 2 Mbit/s liegt. Bei der verwendeten Frequenzmodulation ASK ist dann eine obere Grenzfrequenz der Filterung möglich, die deutlich unterhalb von 5MHz liegt. Für die oben beschriebene Schwebung zeigt dieses Filter integrierendes Verhalten und glättet somit den zeitlichen Verlauf des Signals. Da jedes der von den verschiedenen feststehenden Einrichtungen 21 zugeführten Signale zur Erhöhung des Signal-Signal-/Rauschabstandes beiträgt, verbessert sich damit die Zuverlässigkeit der Datenübertragung.

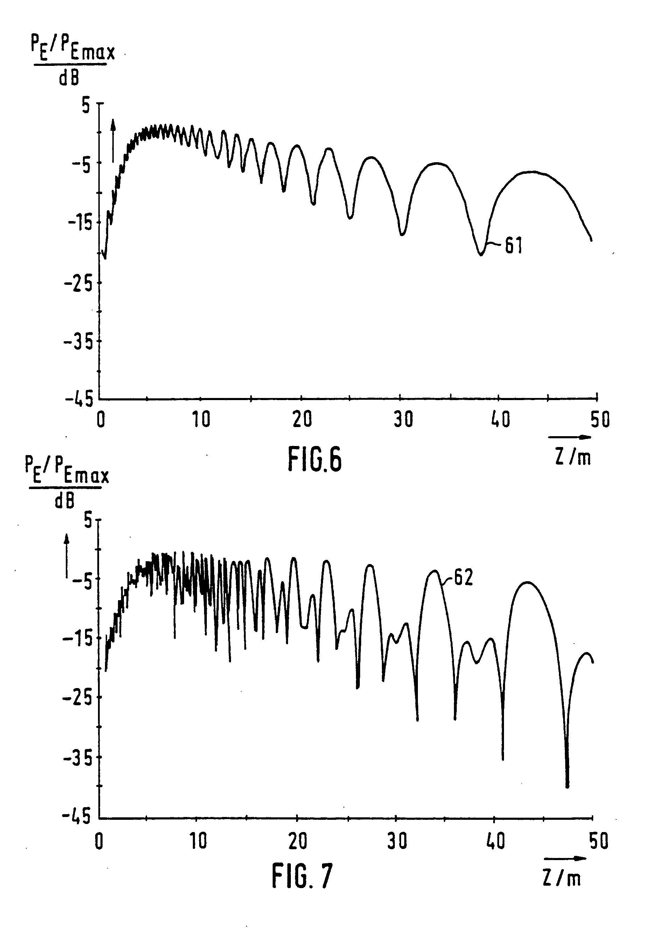

Im folgenden wird die Funktionsweise des Systems bechrieben. Zunächst ist in Figur 6 ein erstes Diagramm dargestellt, bei dem die normierte Empfangsleistung an der Fahrzeugeinrichtung 23 in Bezug zum Abstand zu einer feststehenden Einrichtung 21 aufgetragen ist. Starke Reflexionen an der Fahrbahn bewirken, daß die Empfangskurve 61 sehr wellig ist. Das bedeutet, daß bei geringfügiger Änderung des Abstandes zur feststehenden Einrichtung 21 die normierte Empfangsleistung sehr stark schwankt. Die dargestellte Kurve ist typisch für eine einzelne Einrichtung 21, die am Straßenrand angeordnet ist.

Das Diagramm der Figur 7 entspricht einer Anordnung von zwei feststehenden Einrichtungen rechts und links einer Fahrbahn. Beide Einrichtungen 21 arbeiten aber auf der gleichen Trägerfrequenz. Die Kurve 62 zeigt sehr starke Feldstärkeänderungen, die teilweise durch starke Bodenreflexionen aber auch wegen Interferenzen auf Grund der gleichen Trägerfrequenz verursacht werden.

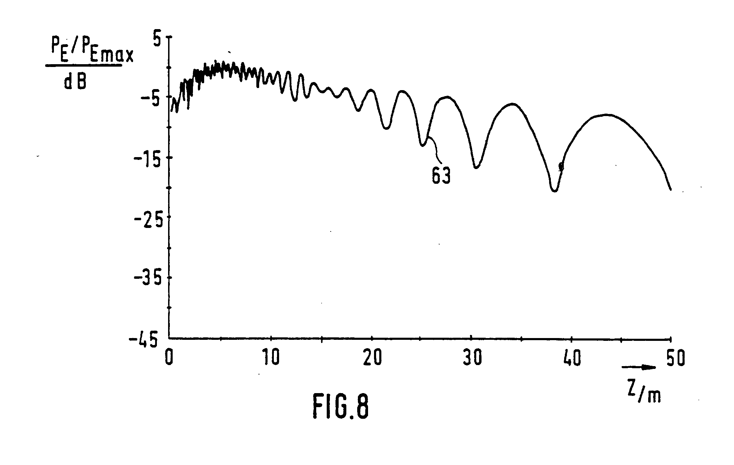

In Figur 8 ist der erfindungsgemäße Verlauf der Empfangsleistung mit zwei feststehenden Einrichtungen 21 dargestellt, die auf unterschiedlichen Trägerfrequenzen arbeiten. Die Amplitudenänderungen der Kurve 63 sind erheblich geringer als die der Kurve 62 der Figur 7. Der Vorteil dieser Anordnung ergibt sich dadadurch, daß bei geringfügiger Änderung des Abstandes zu den feststehenden Einrichtungen 21 die Feldstärkenänderungen relativ gering sind, so daß immer mit einer gesicherte Datenübertragung gerechnet werden kann.

Um zu gewährleisten, daß die feststehenden Einrichtungen 21, die ja räumlich getrennt voneinander angeordnet sind, synchron und die gleichen Daten senden, sind diese mit dem gleichen Datenempfänger 36 bzw. dem Datensender 37 verbunden. Der Datensender 37 kann z.B. ein zentraler Verkehrsleitrechner sein, der entsprechende Verkehrsdaten an die feststehenden Einrichtungen 21 abgibt. Der Verkehrsleitrechner kann aber auch verwendet werden zur Gebührenerfassung für Straßenbenutzungsgebühren, Brückengebühren etc. Der Datenempfänger 36 enthält im wesentlichen einen Speicher, der die von dem Fahrzeug ausgesandten Datensignale speichert, damit sie in dem Verkehrsleitrechner weiterverarbeitet werden können. Beispielsweise können im Falle der Verkehrsleitung dieses Daten über Fahrzeugart, Geschwindigkeit und dgl. sein. Im Falle der Gebührenverrechnung kann festgestellt werden, ob die Gebührenzahlung gültig ist.

Prinzipiell ist das erfindungsgemäße System zur bidirektionalen Datenübertragung von der Modulationsart unabhängig, so daß auch eine andere Modulationsart, beispielsweise eine Phasenmodulation verwendbar ist.

## Patentansprüche

1. System zur bidirektionalen, elektromagnetischen Übertragung von Datensignalen zwischen mehreren feststehenden Einrichtungen, beispielsweise von an einer Bake angeordneten Sende-/Empfangseinrichtungen, die zumindest teilweise im gleichen Kommunikationsgebiet arbeiten, und einer korrespondierenden Fahrzeugeinrichtung (23), wobei die feststehenden Einrichtungen codierte Datensignale an die Fahrzeugeinrichtung senden und die Fahrzeugeinrichtung nach dem semi-passiven Transponderbetrieb codierte Datensignale an die feststehenden Einrichtungen überträgt, **dadurch gekennzeichnet, daß** wenigstens zwei feststehende Einrichtungen (21) vorgesehen sind, die mit vorgegebenen Frequenzabständen arbeiten und im Downlink-Betrieb synchron die gleichen Daten senden und daß die Empfangseinrichtung (1) der Fahrzeugeinrichtung (23) ausgebildet ist, die Sendefrequenzen der feststehenden Sendeeinrichtungen (21) zu empfangen, wobei die auftretende Schwebung der Wellenfelder durch Filterung vermindert wird.

2. System nach Anspruch 1, **dadurch gekennzeichnet, daß** die Empfangseinrichtung (1) der Fahrzeugeinrichtung (23) wenigstens eine Antenne aufweist, die in Streifenleitungstechnik ausgebildet ist.

3. System nach einem der vorhergehenden Ansprüche, dadurch gekennzeichent, daß die Fahrzeugeinrichtung als Demodulator (55) eine Detektordiode aufweist.

4. System nach einem der vorhergehenden Ansprüche, **dadurch gekennzeichnet, daß** die Fahrzeugeinrichtung (23) einen Filter (54), vorzugsweise mit einem Tiefpaß- oder Bandpaßverhalten aufweist.

5. System nach einem der vorhergehenden Ansprüche, **dadurch gekennzeichnet, daß** die Fahrzeugeinrichtung (23) ausgebildet ist, im Uplink-Betrieb jede empfangene Trägerfrequenz mit den zu sendenden Datensignalen synchron zu modulieren und an die feststehenden Einrichtungen (21) zu senden.

6. System nach Anspruch 5, **dadurch gekennzeichnet, daß** die feststehenden Einrichtungen (21) mit einem Datenempfänger (36) verbunden sind, der jeweils die empfangenen und demodulierten Datensignale einer feststehenden Einrichtung (21) mit denen einer weiteren feststehenden Einrichtung (21) vergleicht und auftretende Datenfehler aussortiert.

7. System nach Anspruch 5 oder 6, **dadurch gekennzeichnet, daß** der Datenempfänger (36) ausgebildet ist, mittels eines Übertragungsprotokolls Datenfehler festzustellen.

8. System nach einem der vorhergehenden Ansprüche, **dadurch gekennzeichnet, daß** die feststehenden Einrichtungen (21) die Datensignale im Downlink-Betrieb nach der Amplitudenmodulation codieren und daß die Fahrzeugeinrichtung (23) im Uplink-Betrieb die Trägerfrequenzen der feststehenden Einrichtungen (21) nach der Frequenzmodulation codiert.

9. System nach einem der vorhergehenden Ansprüche, **dadurch gekennzeichnet, daß** das System zur Übertragung von Verkehrs- , Navigationsdaten und/oder für die Abrechnung von Straßenbenutzungsgebühren verwendbar ist.

## Claims

1. System for bidirectional electromagnetic transmission of data signals between a plurality of fixed devices, for example transceiver devices which are arranged on a beacon and which operate at least partially in the same communications zone, and a corresponding vehicle device (23), the fixed devices sending coded data signals to the vehicle device, and the vehicle device transmitting coded data signals to the fixed devices in the semi-passive transponder mode, **characterized in that** at least two fixed devices (21) are provided which operate with predefined frequency intervals and send the same data synchronously in downlink mode, and **in that** the receiver device (1) of the vehicle device (23) is designed to receive the transmission frequencies of the fixed transmitter devices (21), the fluctuation in the wavelengths which occurs being reduced by filtering.

2. System according to Claim 1, **characterized in that** the receiver device (1) of the vehicle device (23) has at least one antenna which is embodied using strip line technology.

3. System according to one of the preceding claims, **characterized in that** the vehicle device has a detector diode as demodulator (55).

4. System according to one of the preceding claims, **characterized in that** the vehicle device (23) has a filter (54), preferably with a low-pass behaviour or bandpass behaviour.

5. System according to one of the preceding claims, **characterized in that** the vehicle device (23) is designed in uplink mode to modulate synchronously any received carrier frequency with the data signals to be transmitted and to transmit them to the fixed devices (21).

6. System according to Claim 5, **characterized in that** the fixed devices (21) are connected to a data receiver (36) which in each case compares the received and demodulated data signals of a fixed device (21) with those of a further fixed device (21) and eliminates data errors which occur.

7. System according to Claim 5 or 6, **characterized in that** the data receiver (36) is designed to detect data errors by means of a transmission protocol.

8. System according to one of the preceding claims, **characterized in that** the fixed devices (21) encode the data signals in the downlink mode using amplitude modulation, and **in that** in uplink mode the vehicle device (23) encodes the carrier frequencies of the fixed devices (21) using frequency modulation.

9. System according to one of the preceding claims, **characterized in that** the system can be used to transmit traffic or navigation data and/or to collect charges for using roads.

## Revendications

1. Système de transmission électromagnétique bidirectionnelle de signaux de données entre plusieurs installations fixes, par exemple des installations d'émission et de réception d'une borne, qui travaillent au moins partiellement dans le même domaine de communication, et une installation de véhicule (23) correspondante, les installations fixes envoyant des signaux de données codés à l'installation de véhicule et l'installation de véhicule transmettant selon un fonctionnement semi-passif de transpondeur, des signaux de données codés aux installations fixes,
**caractérisé par**
au moins deux installations fixes (21) travaillant à des intervalles de fréquence prédéterminés et émettant, en synchronisme, en mode descendant, les mêmes données,
l'installation de réception (1) de l'installation (23) du véhicule étant formée pour recevoir les fréquences d'émission des installations d'émission fixe (21) avec les fluctuations des champs des ondes réduites par filtrage.

2. Système selon la revendication 1,
**caractérisé en ce que**
l'installation de réception (1) de l'installation (23) du véhicule comporte au moins une antenne réalisée selon la technique des bandes conductrices.

3. Système selon l'une quelconque des revendications précédentes,
**caractérisé en ce que**
l'installation du véhicule comporte comme démodulateur (55) une diode de détection.

4. Système selon l'une quelconque des revendications précédentes,
**caractérisé en ce que**
l'installation (23) du véhicule comporte un filtre (54) avec de préférence un comportement de filtre passe-bas ou de filtre passe-bande.

5. Système selon l'une quelconque des revendications précédentes,
**caractérisé en ce que**
l'installation (23) du véhicule module, en mode ascendant, toute fréquence porteuse reçue avec les signaux de données à émettre, de manière synchrone et les envoie vers les installations fixes (21).

6. Système selon la revendication 5,
**caractérisé en ce que**
les installations fixes (21) son reliées à un récepteur de données (36) qui compare chaque fois les signaux de données reçus et démodulés d'une installation fixe (21) à ceux d'une autre installation fixe (21) et élimine les erreurs de données produites.

7. Système selon l'une quelconque des revendications 5 ou 6,
**caractérisé en ce que**
le récepteur de données (36) détermine les erreurs de données à l'aide d'un protocole de transmission.

8. Système selon l'une quelconque des revendications précédentes,
**caractérisé en ce que**
les installations fixes (21) codent les signaux de données en mode descendant selon la modulation d'amplitude et l'installation (23) du véhicule code les fréquences de porteuse en mode montant des installations fixes (21) par modulation de fréquence.

9. Système selon l'une quelconque des revendications précédentes,
**caractérisé en ce que**
le système est appliqué pour la transmission de données de circulation, de navigation et/ou pour le calcul de droit de péage.
